# EUROPEAN PATENT SPECIFICATION

(11) **EP 3 355 706 B1**
(45) Date of publication and mention of the grant of the patent: **04.11.2020**
(21) Application number: 16852751.3
(22) Date of filing: 30.09.2016
(51) Int. Cl.: A23G 4/00

(54) **GUM BASES AND CHEWING GUMS USING THERMOSENSITIVE POLYMERS**
KAUGUMMIBASIS UND KAUGUMMIS UNTER VERWENDUNG WÄRMEEMPFINDLICHER POLYMERE
BASES DE GOMMES ET GOMMES À MÂCHER UTILISANT DES POLYMÈRES THERMOSENSIBLES

(30) Priority: 30.09.2015 US 201562235327 P
(43) Date of publication of application: 08.08.2018
(73) Proprietor: Wm. Wrigley Jr. Company, Chicago, IL 60642 (US)
(72) Inventor: LIU, Jingping, Chicago, IL 60642 (US)
(74) Representative: Haseltine Lake Kempner LLP
(86) International application number: PCT/US2016/054909
(87) International publication number: WO 2017/059312

(56) References cited:
- WO-A1-2011/032031
- US-A- 5 580 590
- US-A1- 2009 130 250
- US-A1- 2010 074 987
- US-A1- 2011 070 320
- US-A1- 2014 161 739
- US-A1- 2014 161 931
- US-A1- 2015 230 495
- US-B1- 6 599 542
- ALMEIDA ET AL.: 'Temperature and pH stimuli-responsive polymers and their applications in controlled and self-regulated drug delivery.' J APPL PHARM SCI. vol. 2, no. 6, June 2012, pages 1 - 10, XP055170149

## Description

### CROSS-REFERENCE TO RELATED APPLICATION

This application claims priority to U.S. Provisional Application Serial No. 62/235,327, filed on September 30, 2015, which is incorporated in its entirety herein.

### SEQUENCE LISTING

The instant application contains a Sequence Listing which has been submitted electronically in ASCII format and is hereby incorporated by reference in its entirety. Said ASCII copy, created on September 30, 2016, is named "069269_0195_SEQ_Lising_ST25.txt" and is 966 bytes in size.

### FIELD

The presently disclosed subject matter relates to chewing gum base compositions comprising one or more thermosensitive polymers. Such compositions have improved removability from surfaces.

### BACKGROUND

The insoluble portion of chewing gums can act as an adhesive upon various substrates (e.g., sidewalks) at ambient temperature. As a result, gum-littering and adhesion is an ongoing issue for the gum industry.

US 2014/0161739 provides for a gum base comprising a) a hydrophilic precursor component comprising hydrolysable units; and b) a copolymer of a hydrophilic monomer with a second monomer selected from vinyl acetate, isobutylene, isoprene, butyl rubber or styrene butadiene; US 2015/0230495 is directed to chewing gum bases comprising a block polymer comprising at least four blocks and having an Order-Disorder Transition Temperature (T_{ODT}) between 20 °C and 250 °C; WO 2011/032031 provides for a chewing gum formulated to produce (after chewing) a cud with a temperature dependent storage modulus differential (ΔlogG'/ΔT) less than 0.050; US 5580590 provides for chewing gum compositions that include elastic protein-based polymers; US 6599542 is directed to non-stick chewing compositions containing plasticized proteinaceous materials which are derived from a combination or blend of at least one protein (i.e., a protein component) and at least one plasticizer (i.e., a plasticizer component); US 2014/0161931 is directed to chewing gums and gum bases comprising food acceptable multi-block copolymers having at least two repeating sequences of two or more polymer blocks having at least three monomer units each.

At average mouth temperature, the chewing gum base is water-insoluble, which prevents it from falling apart during chewing. The solubility of conventional gum base does not change with a change in temperature. However, if chewing gums comprise polymers with Low Critical Solution Temperatures (LCST) (*i.e*., in the vicinity of or below mouth temperature), and the ambient temperature is lower than the mouth temperature, the cohesion of the LCST gum cud/base will vary dramatically after littering. For example, when gum cud is inside the mouth, the saliva has little solvation effect on the LCST polymers. However, when gum cud is discarded on the sidewalk, and the ambient temperature is lower than the LCST, the gum cud has higher tendency to dissolve or disintegrate upon exposure to water, which could be from saliva, rain or a cleaning solution. This exposure results in a change of the viscoelasticity and the water resistance of the gum cud. Such changes to gum viscoelasticity then alter the ability of the gum cud to adhere to various surfaces when exposed to moisture and different temperatures upon disposal.

Therefore, there is a need in the art to formulate chewing gum with ideal viscoelastic properties and water-insolubility at body temperature (during chewing) and at ambient temperature (after disposal) to increase the removability of chewing gum and/or gum cud from various surfaces.

### SUMMARY OF THE INVENTION

The presently disclosed subject matter is directed to a chewing gum base comprising at least one thermosensitive polymerwherein the thermosensitive polymer has a Lower Critical Solution Temperature (LCST) of from 0°C to 40°C and In certain embodiments, the thermosensitive polymer has a LCST of from 20°C to 37°C. In other embodiments, the thermosensitive polymer has a LCST of from 25°C to 35°C.

The at least one thermosensitive polymer is selected from the group consisting of poly(N-isopropylacrylamides), cross-linked poly(N-isopropylacrylamides), polyoxypropylene-polyoxyethylene block copolymers, triblock copolymer polyoxyethylene-polyoxypropylene-polyoxyethylene, N-substituted acrylamide derivatives, poly(amino acid)s, cellulose ethers, starch ethers, poly(ether-ester)block copolymers, chitosan-beta-glycerophosphate, and combinations thereof. In certain embodiments, the at least one thermosensitive polymer is an N-substituted acrylamide derivative, wherein the N-substituted acrylamide derivative is selected from the group consisting of N-n-propylacrylamide, N,N-diethylacrylamide, N-cyclopropyl methacrylamide, and combinations thereof.

In certain embodiments, the at least one thermosensitive polymer is a poly(amino acid), wherein the poly(amino acid) is selected from the group consisting of methacryloyl glycine methyl ester, methacryloyl proline, methacryloyl phenylalanine methyl ester, methacryloyl alanine methyl ester; polymers containing an Arg-Gly-Asp-Ser sequence or arginine-glycine-aspartic acid-serine blocks (RGDS, SEQ ID NO:1); poly(amino acid)s containing two different pentamer blocks: where one block has a Val-Pro-Gly-Val-Gly (VPGVG, SEQ ID NO:2) sequence, and the second block has a Val-Pro-Gly-X-Gly (VPGXG, SEQ ID NO:3) sequence, in which X can be one amino acid residue selected from the group consisting of Leu, ILE, Met, Val, Glu(COOCH₃), Glu(COOH), Cys, His, LysNH3, Lys and Asp(COOH); and combinations thereof.

In certain embodiments, the at least one thermosensitive polymer is a cellulose ether. In certain embodiments, the cellulose ether is hydroxy-propyl cellulose. In certain embodiments, the at least one thermosensitive polymer is a starch ether. In certain embodiments, the starch ether is 3-[2-butoxy(ethoxy)m]-2-hydroxypropyl starch ether (BEmS) (where m = 0, 1, or 2).

In certain embodiments, the at least one thermosensitive polymer is triblock copolymer polyoxyethylene-polyoxypropylene-polyoxyethylene, and the base further comprises from 1% to 40% by weight ethylene oxide.

In certain embodiments, the one or more thermosensitive polymers is present in an amount of from 1% to 35% by weight. In certain embodiments, the one or more thermosensitive polymers is present in an amount of from 10% to 25% by weight. In certain embodiments, the one or more thermosensitive polymers is present in an amount of from 1% to 10% by weight.

The presently disclosed subject matter is directed to a chewing gum formulation comprising the chewing gum bases described herein.

The novel features which are believed to be characteristic of the application, both as to its organization and method of operation, together with further objects and advantages will be better understood from the following description.

### DETAILED DESCRIPTION

As noted above, to date, there remains a need in the art for chewing gum and chewing gum base that can be easily removed from solid surfaces. The presently disclosed subject matter addresses this need through the use of thermosensitive polymers in gum base and chewing gum compositions.

### 1. Definitions

The terms used in this specification generally have their ordinary meanings in the art, within the context of this disclosed subject matter and in the specific context where each term is used. Certain terms are discussed below, or elsewhere in the specification, to provide additional guidance to the practitioner in describing the compositions and methods of the disclosed subject matter and how to make and use them.

Although some terms are referred to in the singular, it is understood that such references can also encompass the plural.

As used herein, the use of the word "a" or "an" when used in conjunction with the term "comprising" in the claims and/or the specification can mean "one," but it is also consistent with the meaning of "one or more," "at least one," and "one or more than one." Still further, the terms "having," "including," "containing" and "comprising" are interchangeable and one of skill in the art is cognizant that these terms are open ended terms.

The term "about" or "approximately" means within an acceptable error range for the particular value as determined by one of ordinary skill in the art, which will depend in part on how the value is measured or determined, *i.e*., the limitations of the measurement system. For example, "about" can mean within 3 or more than 3 standard deviations, per the practice in the art. Alternatively, "about" can mean a range of up to 20%, preferably up to 10%, more preferably up to 5%, and more preferably still up to 1% of a given value.

Unless otherwise specified, all percentages used herein are weight percent. All percentages and ratios used herein are by weight of the total composition and all measurements made are at 25°C, unless otherwise designated.

As used herein, "thermosensitive polymer" means a polymer that exhibits a drastic change of its physical properties with temperature. As used herein, the term "thermosensitive polymer" is used interchangeably with "temperature-sensitive polymer," "thermoresponsive polymer," or "temperature-responsive polymer."

As used herein, the terms "Lower Critical Solution Temperature" or LCST refer to the transition temperature, below which a thermosensitive polymer is soluble in the solvent and above which the thermosensitive polymer becomes insoluble.

As used herein, the terms "Volume Phase Transition Temperature" or VPTT refer to the transition temperature, below which a thermosensitive polymer hydrogel swells and above which the hydrogel collapses. Volume Phase Transition Temperature can simply be referred to as transition temperature herein.

As used herein, the term "gum cud" refers to the remaining portion of a chewing gum formulation after mastication.

As used herein, the term "chewing gum" refers to a flavored substance intended for chewing. The term as used herein also includes bubble gum and confectionery products containing chewing gum. In certain embodiments, chewing gum forms include, but are not limited to, tablets, sticks, solid balls, hollow balls, cut and wrap, and pellets or pillows. As used herein, chewing gum contains a water insoluble base portion and a water-soluble bulk portion.

As used herein, the term "cold flow" refers to the viscous flow of a gum base composition or chewing gum formulation at ordinary, e.g., ambient temperatures.

### 2. Gum Base Compositions

The presently disclosed subject matter relates to compositions of chewing gum, and more specifically to chewing gum bases, which include thermosensitive polymers. The addition of at least one thermosensitive polymer can improve the viscoelasticity and removability of chewing gum and/or chewing gum cud from various surfaces.

In general, a chewing gum composition comprises (i) a water-soluble bulk portion, (ii) water insoluble flavoring agents, and (iii) a water insoluble chewable gum base portion. The water-soluble bulk portion dissipates with a portion of the water insoluble flavoring agents over a period of time during chewing. However, the water insoluble gum base portion is retained in the mouth throughout the chew, forming what is known as gum cud. The produced gum cud is an adhesive substance that is difficult to remove once attached to dry surfaces (*e.g*., sidewalks and the like).

### 2.1 Insoluble Gum Bases

Water insoluble gum bases can contain any combination of elastomers, vinyl polymers, elastomer plasticizers, fillers, softeners, waxes and other optional ingredients such as colorants and antioxidants. Gum bases are complex, amorphous polymer blends. In one aspect, the unique viscoelastic properties of the gum results in good chewing texture. However, these same properties cause the gum to behave like a cold flow substance. As a result, the gum diffuses inside the pores of a substrate after deposition, but behaves like a "tough solid" during attempted removal, leaving behind gum residue. At ambient temperature and body temperature, for conventional gum cuds, there is no significant change in viscoelasticity.

The subject matter disclosed herein provides for gum bases that have less removing residue than the conventional chewing gum. Use of thermosensitive polymers to formulate the insoluble of gum base can alter the viscoelasticity and therefore, gum cud removability.

### 2.1.1 Thermosensitive Polymers

The presently disclosed subject matter addresses the need of removable gum from surfaces and substrates through incorporation of thermosensitive polymers in the gum base composition.

Thermosensitive polymers undergo a phase transition at a Lower Critical Solution Temperature (LCST) in aqueous solution versus ordinary polymers. Below the LCST, the polymer favorably interacts with water to form a hydrated conformation. Cross-linked thermosensitive polymers, in one non-limiting example, can swell and form a hydrogel. This change in viscoelasticity causes the composition to become more fluid-like or solid-like. In contrast, at temperatures above the LCST, the thermosensitive polymer dehydrates or shrinks, and behaves like an ordinary polymer. The removability of the gum base is thereby increased.

A thermosensitive polymer has a LCST in the range of from 0°C to 40°C. In certain embodiments, the temperature range is from 20°C to 37°C. In certain embodiments, the thermosensitive polymer has a LCST of from 25°C to 35°C.

In certain embodiments, the thermosensitive polymers include poly(N-isopropylacrylamides) (PNIPAA). In specific embodiments, the thermosensitive polymer is linear poly(N-isopropylacrylamide). In certain embodiments, the thermosensitive polymer includes branched or cross-linked poly(N-isopropylacrylamides). In certain embodiments, the degree of cross-linking in the polymer alters the ability of the polymer to dissolve in solution. For example, in certain embodiments, cross-linked gel of PNIPAA undergoes a reversible volume transition. In certain embodiments, the thermosensitive polymer is a cross-linked poly(N-isopropylacrylamide) with a transition temperature of 20°C. In certain embodiments, the thermosensitive polymer is a cross-linked poly(N-isopropylacrylamide) with a transition temperature of 30°C.

In certain embodiments, the presently disclosed subject matter can include block copolymers. In certain embodiments, the block polymer is polyoxypropylene-polyoxyethylene. In certain embodiments, the block polymer can include a combination of hydrophilic polyoxyethylene blocks and hydrophobic polyoxypropylene blocks. In certain embodiments, the presently disclosed subject matter can include triblock copolymers. In certain embodiments, the triblock copolymer includes a single propylene oxide (PO) block sandwiched between two ethylene oxide (EO) blocks. In certain embodiments, the LCST of the triblock copolymer can be adjusted by varying the ratio of EO/PO and molecular weight. In certain non-limiting embodiments, the one or more thermosensitive polymers of the presently disclosed subject matter comprise triblock copolymer polyoxyethylene-polyoxypropylene-polyoxyethylene and ethylene oxide with a molecular weight in the range of from 1000 g/mole to 4000 g/mole. In certain non-limiting embodiments, the triblock copolymer polyoxyethylene-polyoxypropylene-polyoxyethylene includes from 1% to 40% by weight ethylene oxide.

The triblock copolymer can have LCST in the range of 0°C to 40°C. In certain embodiments, the temperature range is 20°C to 37°C. In certain embodiments, the block polymer is polyoxypropylene-polyoxyethylene and the transition temperature is 37°C. In certain embodiments, the block polymer is polyoxypropylene-polyoxyethylene, and the transition temperature is 15°C. In certain embodiments, the block polymer is polyoxypropylene-polyoxyethylene and the transition temperature is 14°C. In certain embodiments, the block polymer is polyoxypropylene-polyoxyethylene and the transition temperature is 20°C.

In certain embodiments, the content of poly(N-isopropylacrylamide) and/or triblock copolymer polyoxypropylene-polyoxyethylene in the gum base can be in a range of from 1% to 35% by weight of the total base composition. In certain embodiments, the content is from 10% to 25% by weight of the total base composition. In certain embodiments, the content is 18.75% by weight of the total base composition. In certain embodiments, the content is 20.0% by weight of the total base composition. In certain embodiments, the content is 9.97% by weight of the total base composition.

In certain non-limiting embodiments, the one or more thermosensitive polymers is aN-substituted acrylamide derivative. In certain embodiments, the N-substituted acrylamide derivative is selected from the group consisting of N-n-propylacrylamide, N,N-diethylacrylamide, N-cyclopropylmethacrylamide, and combinations thereof.

In certain non-limiting embodiments, the one or more thermosensitive polymers is a poly(amino acid). In certain embodiments, the poly(amino acid) is selected from the group consisting of methacryloylglycine methylester, methacryloylproline, methacryloylphenylalanine methyl ester, methacryloylalanine methyl ester; polymers containing an Arg-Gly-Asp-Ser sequence or arginine-glycine-aspartic acid-serine blocks (RGDS, SEQ ID NO: 1); poly(amino acid)s containing two different pentamer blocks: where one block has a Val-Pro-Gly-Val-Gly (VPGVG, SEQ ID NO:2) sequence, and the second block has a Val-Pro-Gly-X-Gly (VPGXG, SEQ ID NO:3) sequence, in which X can be one amino acid residue selected from the group consisting of Leu, ILE, Met, Val, Glu(COOCH₃), Glu(COOH), Cys, His, LysNH₃, Lys and Asp(COOH); and combinations thereof.

In certain non-limiting embodiments, the thermosensitive polymer is a cellulose ether. In certain embodiments, the cellulose ether is selected from the group consisting of hydroxy-propylcellulose, starch ether, poly(ether-ester)block copolymers, chitosan-beta-glycerophosphate and combinations thereof.

In certain embodiments, the at least one thermosensitive polymer is a starch ether. In certain embodiments, the starch ether is 3-[2-butoxy(ethoxy)m]-2-hydroxypropyl starch ether (BEmS) (where m = 0, 1, or 2).

The gum base of the presently disclosed subject matter can also include one or more colorants, whiteners, and/or antioxidants. In certain embodiments, the colors and whiteners can include, but are not limited to, FD&C-type dyes and lakes, fruit and vegetable extracts, titanium dioxide or mixtures thereof. In certain embodiments, the antioxidants can include, but are not limited to, beta-carotenes, acidulants (*e.g*., Vitamin C), alpha-tocopherol (Vitamin E), beta, gamma and delta tocopherols, propyl gallate, butylated hydroxyanisole (BHA), butylated hydroxytoluene (BHT) and tertiary butyl hydroquinone (TBHQ). In specific embodiments, the gum base includes optional minor amounts (about one percent or less) of miscellaneous ingredients such as colorants, antioxidants, etc.

### 3. Chewing Gum

The presently disclosed subject matter includes chewing gum formulations comprising the above disclosed gum base compositions. Methods of making the chewing gum formulations are also contemplated.

### 3.1 Formulations

In certain embodiments, the gum base compositions disclosed above can be incorporated into chewing gum formulations. In certain embodiments, the chewing gum formulation can include one of the disclosed water-insoluble gum base compositions and a water-soluble bulking agent portion.

The water soluble portion of the chewing gum typically includes a bulking agent (also called bulk sweeteners) together with minor amounts of secondary components such as flavoring agents (including sensates such as physiological cooling agents, warming agents and tingling agents), high-intensity sweeteners, colorants, humectants, gum emulsifiers, acidulants, fillers, and binders. Typically, the water-soluble portion, sensates, and flavors dissipate during chewing and the gum base is retained in the mouth throughout the chew.

In certain embodiments, bulk sweeteners can include both sugars and sugar alcohols. Bulk sweeteners can constitute from 5% to 95% by weight of the chewing gum, more typically, from 20% to 80% by weight of the gum, and more commonly, from 30% to 60% by weight of the gum. Sugar sweeteners generally include saccharide-containing components commonly known in the chewing gum art, including but not limited to, sucrose, dextrose, maltose, dextrin, dried invert sugar, fructose, galactose, corn syrup solids, and the like, alone or in combination. Sugarless sweeteners include, but are not limited to, sugar alcohols such as sorbitol, mannitol, xylitol, hydrogenated starch hydrolysates, maltitol, erythritol, isomalt and the like, alone or in combination.

In certain embodiments, a variety of flavoring agents can also be used, if desired. Flavoring agents can include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components can also be used. Natural and artificial flavoring agents can be combined in any sensorially acceptable fashion. Included in the general category of flavors are sensates, chemicals which impart physiological sensations in the mouth such as cooling agents, warming agents and tingling agents. Examples of cooling agents include menthol, WS-23, WS-3, WS-5, isopulegol, esters of menthol such as menthyl succinate, menthyl lactate and menthyl glutarate, among others. Warming and tingling agents include capsaicin, piperine, jambu and spilanthol. In certain embodiments, tackifiers include, but are not limited to, natural rosin esters such as glycerol ester of partially hydrogenated rosin, glycerol ester of polymerized rosin, glycerol ester of partially dimerized rosin, glycerol ester of rosin, pentaerythritol esters of partially hydrogenated rosin, methyl and partially hydrogenated methyl esters of rosin, pentaerythritol ester of rosin or mixtures; synthetic resins such as terpene resins derived from alpha-pinene, beta-pinene and/or d-limonene, polyvinyl acetate resin, polyethylene, poly-dl-lactide resin and combinations thereof.

In certain embodiments, the flavor agent can be used in amounts of from 0.1 to 15 weight percent of the gum, and preferably, from 0.2 to 5 weight percent of the gum. In certain embodiments, the flavoring agent is present in an amount within the range of from 0.1 to 10.0 weight percent or from 0.5 to 3.0 weight percent of the gum formulation. In certain embodiments, the flavoring agent is present in an amount of 0.9 weight percent of the gum formulation. In the case of fruit flavored gums, up to 3% of an acid such as citric acid, malic acid or adipic acid can be added for tartness.

In some embodiments, the chewing gum ingredients can include one or more high intensity sweeteners. As used herein, the term "high intensity sweetener" refers to any substance that is at least twenty times sweeter than sucrose. Such sweeteners include, but are not limited to, saccharin, cyclamate, aspartame, alitame, neotame, other peptide-based sweeteners, sucralose, acesulfame K, stevia (including purified extracts such as rebaudioside A), glycyrrhizin, neohesperidin dihydrochalcone and mixtures thereof. In some embodiments, at least a portion of the high intensity sweetener will be encapsulated. Such encapsulations can be produced by granulation, agglomeration, extrusion and grinding, spray drying, fluid bed encapsulation or any other known means. In certain embodiments, suitable sugar alcohols include sorbitol, mannitol, xylitol, hydrogenated starch hydrolysates, maltitol, and the like, as well as combinations thereof. In certain embodiments, the sugarless gum comprises a combination of a high-potency sweetener with a sugar alcohol, e.g., aspartame and sorbitol. Usage levels will depend on the potency of the sweetener, degree and effectiveness of the encapsulation (if any) as well as the sensory profile desired for the product. Generally, the sweetener can be used in a range of from 0.005% to 5% w/w. The sweetener can be used at levels as low as 0.005% w/w or as low as 0.05% w/w or as low as 0.2% w/w. The sweetener can be used at levels as high as 5% w/w or 3% w/w or 2% w/w in the chewing gum composition. In certain embodiments, the high intensity sweetener can be present at a level of from 0.1% to 1.0% of the chewing gum ingredients.

In certain embodiments, the gum base additionally includes a combination of synthetic elastomers, natural elastomers, filler, tackifiers, lipids, plasticizers, humectants, and optional minor amounts (about one percent or less) of miscellaneous ingredients such as colorants, antioxidants, etc.

Synthetic elastomers can include polyisoprene, polysiobutylene, isobutylene-isoprene copolymer, polyvinyl acetate, styrene butadiene rubber, vinyl acetate-vinyl laurate copolymer, poly-dl-lactide, glycolic acid-lactide copolymer or mixtures thereof.

Natural elastomers can include natural rubber such as smoked or liquid latex and guayule as well as natural gums such as jelutong, lechi caspi, perillo, massaranduba balata, massaranduba chocolate, nispero, rosindinha, chicle, gutta hang kang or mixtures thereof.

In certain embodiments, fillers include, but are not limited to, magnesium and calcium carbonate, ground limestone and silicate types such as magnesium and aluminum silicate, clay, alumina, talc as well as titanium oxide, mono-, di- and tricalcium phosphate, cellulose polymers such as ethyl, methyl and wood or mixtures thereof, and combinations thereof.

Tackifiers can include natural rosin esters such as glycerol ester of partially hydrogenated rosin, glycerol ester of polymerized rosin, glycerol ester of partially dimerized rosin, glycerol ester of rosin, pentaerythritol esters of partially hydrogenated rosin, methyl and partially hydrogenated methyl esters of rosin, pentaerythritol ester of rosin or mixtures; synthetic resins such as terpene resins derived from alpha-pinene, beta-pinene and/or d-limonene, polyvinyl acetate resin, polyethylene, and poly-dl-lactide resin.

Lipids can include mono, and/or -di, and/or -tri glycerides of alkanoic acids, or of monoenoic acids or of polyunsaturated fatty acids with carbon chain length from C₄-C₂₄ or mixture thereof, hydrogenated and partially hydrogenated mono, and/or -di, and/or -tri glycerides of monoenoic acid and of polyunsaturated fatty acids, acetylated glycerides of fatty acids, lecithin, paraffin wax, microcrystalline and natural waxes such as beeswax and carnauba.

In certain embodiments, plasticizers include, but are not limited to, glycerol triacetate, triethyl citrate, acetyl triethylcitrate, methyl ester of wood rosin and combinations thereof.

In certain embodiments, the gum base includes from 5 to 75 weight percent synthetic elastomers, from 0 to 30 weight percent natural elastomers, from 0 to 15 weight percent filler, from 5 to 55 weight percent tackifiers, from 5 to 45 weight percent lipids, from 0 to 15 weight percent plasticizers and optional minor amounts (about one percent or less) of miscellaneous ingredients such as colorants, antioxidants, etc. In other embodiments, the gum base includes from 25% to 60% by weight synthetic elastomers, from 0% to 5% by weight natural elastomers, from 0% to 40% by weight filler, and from 15% to 45% by weight softener, including tackifiers, lipids and plasticizers. In other embodiments, the gum base is substantially free of natural elastomers and filler.

In certain embodiments, humectants are added to the chewing gum in order to optimize the chewability and mouth feel of the gum. In certain embodiments, humectants, also known in the art as plasticizers or plasticizing agents, can constitute from 0.5% to 15.0% by weight of the chewing gum formulation. Softeners include, but are not limited to, glycerin, lecithin, and combinations thereof. Further, aqueous sweetener solutions such as those containing sorbitol, hydrogenated starch hydrolysates, corn syrup and combinations thereof can be used as softeners and binding agents in chewing gum formulations. In certain embodiments, the chewing gum formulation contains 1 percent glycerin by weight. In certain embodiments, the chewing gum formulation contains 1.4 percent glycerin by weight. In certain embodiments, the gum base compositions as disclosed herein, can be incorporated into a sugarless chewing gum formulation. In certain embodiments, sugarless sweeteners can include components with sweetening characteristics but that are devoid of the commonly known sugars. In certain embodiments, examples include, but are not limited to high-potency sweeteners and/or sugar alcohols.

Combinations of sugar and/or sugarless sweeteners can be used in chewing gum. Additionally, the softener can also provide additional sweetness such as with aqueous sugar or alditol solutions. In certain embodiments, the water-soluble sweetener portion is a mixture of sugar at 50% by weight of the final chewing gum, dextrose monohydrate at 10% by weight, and/or corn syrup at 17% by weight. In certain embodiments, the formulation comprises 60% by weight sucrose and/or 17% by weight corn syrup. In certain embodiments the formulation comprises 58.7% by weight sucrose and/or 17% by weight corn syrup.

If a low calorie gum is desired, a low calorie bulking agent can be used. Examples of low calorie bulking agents include: polydextrose; oligofructose (Raftilose); inulin (Raftilin); fructooligosaccharides (NutraFlora); palatinose oligosaccharide; guar gum hydrolysate (BeneFiber); or indigestible dextrin (Fibersol). However, other low calorie bulking agents can be used.

In certain embodiments, the insoluble gum base composition constitutes from 5% to 95% by weight of the chewing gum formulation. In certain embodiments, the insoluble gum base composition comprises from 10% to 50%, or from 20% to 35% by weight of the chewing gum formulation. In certain embodiments, the thermosensitive polymer constitutes at least 1%, or at least 2%, or at least 3%, or at least 4%, or at least 5% by weight of the chewing gum formulation. In certain embodiments, the thermosensitive polymer constitutes no more than 10% or no more than 8% or no more than 6% by weight of the chewing gum formulation. In certain embodiments, the content is in the range of from 2% to 6% by weight of the chewing gum formulation.

### 3.2 Methods of Making

In certain embodiments, chewing gum is manufactured by sequentially adding the various chewing gum ingredients to a commercially available mixer known in the art. In certain embodiments, after the ingredients have been thoroughly mixed, the gum mass can be discharged from the mixer and shaped into the desired form such as by rolling into sheets and cutting into sticks, extruding into chunks or casting into pellets.

In certain embodiments, the ingredients are mixed by first melting the gum base and adding it to the running mixer. In certain embodiments, the base can be melted in the mixer itself. In certain embodiments, color or emulsifiers can be added at this time. In certain embodiments, a softener, for example, glycerin, can be added at this time along with syrup and a portion of bulking agent. In certain embodiments, further portions of the bulking agent can then be added to the mixer. In certain embodiments a flavoring agent is added with the final portion of the bulking agent. In certain embodiments, a twice coated sweetener can be added after the final portion of bulking agent and flavor have been added.

In some embodiments a coating can be applied to the extruded chewing gum. In certain embodiments, this is accomplished by pan coating the expanded chewing gum piece. In a pan coating process, centers (e.g., expanded chewing gum pieces) are tumbled in a pan while a coating syrup, typically a sugar or sugar alcohol solution, is applied, for instance by spraying or ladling. Between applications of the coating syrup, the pellets are dried, preferably by passing a current of heated and/or dried air over or through the pellet bed. Numerous layers of coating are built up, often alternating with applications of powdered coating material or an inert filler to accelerate the build-up of the coating. A final layer of a polishing compound, for example carnauba wax, can be applied. In addition to sugar (sucrose), preferred coating materials include maltitol, isomalt, xylitol, sorbitol and erythritol, although others can be used as well. In addition to the coating material, the coating syrup can include film forming agents such as Gum Arabic, high intensity sweeteners, flavors and colors.

### EXAMPLES

The presently disclosed subject matter will be better understood by reference to the following Examples, which are provided as exemplary of the disclosed subject matter, and not by way of limitation.

### Example 1: Preparation of gum base with thermosensitive polymers

This example provides the preparation of gum bases with thermosensitive polymers.

### A. Preparation

The gum base was formulation using cross-linked poly(N-isopropylacrylamide) with a transition temperature threshold of 20°C. The gum base was made according to formulation #1 in Table 1.

**Table 1. Chewing gum bases containing thermosensitive polymers**

| | **#1 %** | **#2 %** | **#3 %** | **#4 %** | **#5 %** | **#6 %** | **Control base %** |
|---|---|---|---|---|---|---|---|
| Isoprene-Isobutylene | 9.52 | 9.52 | 10.15 | 10.15 | 11.42 | 10.15 | 10.0 |
| Polyvinyl acetate | 22.69 | 22.69 | 24.2 | 24.2 | 27.22 | 24.2 | 23.9 |
| Terpene resin | 15.62 | 15.62 | 16.66 | 16.66 | 18.73 | 16.66 | 16.5 |
| PNIPAA-20°C | 18.75 | - | - | - | - | - | - |
| PNIPAA-30°C | - | 18.75 | - | - | - | - | - |
| Pluronic L31 | - | - | 20.0 | - | - | - | - |
| Pluronic L101 | - | - | - | 20.0 | - | - | - |
| Pluronic L121 | - | - | - | - | 9.97 | - | - |
| Pluronic L81 | - | - | - | - | - | 20.0 | - |
| Hydroxylated lecithin | 6.25 | 6.25 | - | - | - | - | - |
| Glycerol monostearate | 5.36 | 5.36 | 5.72 | 5.72 | 6.44 | 5.72 | 5.6 |
| Coco powder | 0.44 | 0.44 | 0.46 | 0.46 | 0.52 | 0.46 | 0.58 |
| Hard fat | 11.92 | 11.92 | 12.72 | 12.72 | 14.31 | 12.72 | 12.5 |
| Shortening | 4.40 | 4.40 | 4.70 | 4.70 | 5.28 | 4.70 | 4.7 |
| Lecithin | 4.53 | 4.53 | 4.83 | 4.83 | 5.44 | 4.83 | 4.8 |
| Calcium carbonate | 0.50 | 0.53 | 0.54 | 0.54 | 0.63 | 0.54 | 21.4 |
| BHT | 0.02 | 0.02 | 0.02 | 0.02 | 0.03 | 0.02 | 0.03 |

In a gum base mixer (Plastograph from Brabender Corp., Rochelle Park, N.J.) set at 120°C, the butyl rubber was heated and stirred with a sigma blade stirrer until the material reached a fine particulate consistency. At this point approximately 1/2 of the terpene resin and all of the coco powder were added and stirred for 10 minutes. A second portion of the resin was added and stirred. This procedure is repeated until all the resin was added. When the elastomeric material had achieved a substantially single homogeneous plastic mass, approximately 1/2 of the low molecular weight polyvinyl acetate was added and stirred for about five minutes. The remaining portion was added and stirred for another five minutes. Then, the hard fat was added and stirred for about 10 minutes followed by step-wise additions of the monoglyceride and shortening in 1/3 portions. This was followed by stirring for about five minutes for each portion. Then, antioxidant BHT was added with five minutes of stirring, followed by the addition of lecithin. The mixture was stirred for 5 minutes under a reduced temperature (to about 65°C). Lastly, cross-linked poly(N-isopropylacrylamide) (Carbomer, Inc., San Diego, CA) and Hydroxylated lecithin (American Lecithin Company, Oxford, CT) were added with stirring for another 15 minutes.

This process was repeated for to produce formulations #2-#6. Formulation #2 used cross-linked poly(N-isopropylacrylamide) with transition temperature at 30°C (PNIPAA-30°C) (Carbomer, Inc., San Diego, CA). Formulation #3 used triblock copolymer of polyoxyethylene-polyoxypropylene with LCST at 37°C (PLURONIC L31, BASF Corporation, Mount Olive, NJ). Formulation #4 used triblock copolymer of polyoxyethylene-polyoxypropylene with LCST at 15°C (PLURONIC L101, BASF Corporation, Mount Olive, NJ). Formulation #5 contained triblock copolymer of polyoxyethylene-polyoxypropylene with LCST at 14°C (PLURONIC L121, BASF Corporation, Mount Olive, NJ). Formulation #6 contained triblock copolymer of polyoxyethylene-polyoxypropylene with LCST at 20°C (PLURONIC L81, BASF Corporation, Mount Olive, NJ).

### B. Results

The resulting base had comparable consistency with conventional gum base.

### Example 2: Preparation of gum formulations

Chewing gum was made by mixing one of the gum bases prepared in Example, with additional components according to formulations #7 and #8 in Table 2. The gum was prepared by following a standard procedure known in the art.

**Table 2. Chewing gum formulations**

| | **#7 %** | **#8 %** | **#9 %** | **control gum %** |
|---|---|---|---|---|
| Formulation #1 | 22.4 | - | - | - |
| Formulation #2 | - | 22.4 | - | - |
| Control Base | - | - | 19.9 | 21 |
| PLURONIC L121 | - | - | 2.2 | - |
| Sucrose | 59.7 | 59.7 | 60 | 59.7 |
| Corn syrup | 17 | 17 | 17 | 17 |
| Glycerin | - | - | - | 1.4 |
| Flavor | 0.9 | 0.9 | 0.9 | 0.9 |

### Example 3: Preparation of gum from triblock copolymer of polyoxyethylene-Polyoxypropylene with LCST at 14°C

Chewing gum was prepared by mixing a control gum base with additional components according to the formulation #9 in Table 2.

In a gum base mixer (Plastograph from Brabender Corp., Rochelle Park, N.J.) set at 65°C, the control gum base was heated and stirred with a sigma blade stirrer until the material reached a fine particulate consistency. Then, approximately 1/2 of the triblock copolymer of polyoxyethylene-polyoxypropylene was added and stirred for 10 minutes. A second portion of the thermosensitive polymer was added and stirred. When the material had achieved a substantially single homogeneous plastic mass, sucrose and corn syrup were added, followed by about 15 minutes of stirring. Lastly, the flavor was added and the mixture was stirred for an additional 5 minutes.

The resulting gum had a similar texture to conventional gum.

### Example 4: Gum removability tests

This Example analyzes the removability of the chewing gum formulations #7, #8, and #9.

### A. Preparation

Chewing gum formulations #7, #8, and #9, according to Examples 2 and 3, and a control were washed with water. Each sample was taken out of the water and placed on a concrete surface, with a release paper covering the top of the gum. Gum samples were then sandwiched between two concrete blocks and pressed with weight of more than 120 lbs. The gum samples between the concrete blocks were heated to 90°F for 24 hours. After removing the concrete blocks and the release paper, the gum samples were aged for 3 days at ambient temperature. A mechanical sweeper (Tennant 5700 XP) was then used to remove the gum samples from the concrete block.

### B. Analysis

The percentage of each gum sample removed from the concrete block is recorded in Table 3.

**Table 3. Gum removability test results**

| **Gum** | **Area removed %** |
|---|---|
| formulation #7 | 53.3 |
| formulation #8 | 98.7 |
| formulation #9 | 70.0 |
| control | 0 |

### C. Results

The results in Table 3 indicate that the control sample was not removable. In contrast, the majority of chewing gum formulations #7-#9 were removable.

## Claims

1. A chewing gum base comprising at least one thermosensitive polymer, wherein the thermosensitive polymer has a LCST of from 0°C to 40°C and is selected from the group consisting of: poly(N-isopropylacrylamide), cross-linked poly(N-isopropylacrylamide), polyoxypropylene-polyoxyethylene block copolymers, triblock copolymer polyoxyethylene-polyoxypropylene-polyoxyethylene, N-substituted acrylamide derivatives, poly(amino acid), cellulose ether, starch ether, poly(ether-ester)block copolymers, chitosan-beta-glycerophosphate, and combinations thereof.

2. The chewing gum base according to claim 1, wherein the thermosensitive polymer has a LCST of from 20°C to 37°C.

3. The chewing gum base according to claim 1, wherein the thermosensitive polymer has a LCST of from 25°C to 35°C.

4. The chewing gum base according to claim 1, wherein the at least one thermosensitive polymer is an N-substituted acrylamide derivative, wherein the N-substituted acrylamide derivative is selected from the group consisting of N-n-propylacrylamide, N,N-diethylacrylamide, N-cyclopropyl methacrylamide, and combinations thereof.

5. The chewing gum base according to claim 1, wherein the at least one thermosensitive polymer is a poly(amino acid), wherein the poly(amino acid) is selected from the group consisting of methacryloyl glycine methyl ester, methacryloyl proline, methacryloyl phenylalanine methyl ester, methacryloyl alanine methyl ester, polymers containing an Arg-Gly-Asp-Ser sequence (RGDS, SEQ ID NO:1); poly(amino acid)s containing two different pentamer blocks, wherein one block has a Val-Pro-Gly-Val-Gly (VPGVG, SEQ ID NO:2) sequence; a second block has a Val-Pro-Gly-X-Gly (VPGXG, SEQ ID NO:3) sequence, in which X is one amino acid residue selected from the group consisting of Leu, ILE, Met, ,Glu(COOCH₃), Glu(COOH), Cys, His, LysNH3, Lys and Asp(COOH); and combinations thereof.

6. The chewing gum base according to claim 1, wherein the at least one thermosensitive polymer is cellulose ether or starch ether.

7. The chewing gum base according to claim 6, wherein the cellulose ether is hydroxy-propylcellulose, and wherein the starch ether is 3-[2-butoxy(ethoxy)m]-2-hydroxypropyl starch ether (BEmS), wherein m = 0, 1, or 2.

8. The chewing gum base according to claim 1, wherein the at least one thermosensitive polymer is triblock copolymer polyoxyethylene-polyoxypropylene-polyoxyethylene, and wherein the base further comprises from 1% to 40% by weight ethylene oxide.

9. The chewing gum base according to any one of the preceding claims, wherein the one or more thermosensitive polymers is present in an amount of from 1% to 35% by weight.

10. The chewing gum base according to any one of the preceding claims, wherein the one or more thermosensitive polymers is present in an amount of from 10% to 25% by weight.

11. The chewing gum base according to claims 1-9, wherein the one or more thermosensitive polymers is present in an amount of from 1% to 10% by weight.

12. A chewing gum formulation comprising the chewing gum bases according any one of the preceding claims.

## Patentansprüche

1. Kaugummigrundlage, umfassend wenigstens ein wärmeempfindliches Polymer, wobei das wärmeempfindliche Polymer eine LCST von 0 °C bis 40 °C aufweist und ausgewählt ist aus der Gruppe bestehend aus: Poly(N-isopropylacrylamid), vernetztem Poly(N-isopropylacrylamid), Polyoxypropylen-Polyoxyethylen-Blockcopolymeren, Polyoxyethylen-Polyoxypropylen-Polyoxyethylen-Triblockcopolymer, N-substituierten Acrylamidderivaten, Poly(aminosäure), Celluloseether, Stärkeether, Poly(ether-ester)-Blockcopolymeren, Chitosan-beta-glycerophosphat und Kombinationen davon.

2. Kaugummigrundlage gemäß Anspruch 1, wobei das wärmeempfindliche Polymer eine LCST von 20 °C bis 37 °C aufweist.

3. Kaugummigrundlage gemäß Anspruch 1, wobei das wärmeempfindliche Polymer eine LCST von 25 °C bis 35 °C aufweist.

4. Kaugummigrundlage gemäß Anspruch 1, wobei das wenigstens eine wärmeempfindliche Polymer ein N-substituiertes Acrylamidderivat ist, wobei das N-substituierte Acrylamidderivat ausgewählt ist aus der Gruppe bestehend aus N-n-Propylacrylamid, N,N-Diethylacrylamid, N-Cyclopropylmethacrylamid und Kombinationen davon.

5. Kaugummigrundlage gemäß Anspruch 1, wobei das wenigstens eine wärmeempfindliche Polymer eine Poly(aminosäure) ist, wobei die Poly(aminosäure) ausgewählt ist aus der Gruppe bestehend aus Methacryloylglycinmethylester, Methacryloylprolin, Methacryloylphenylalaninmethylester, Methacryloylalaninmethylester, Polymeren, die eine Arg-Gly-Asp-Ser-Sequenz (RGDS, SEQ ID NO:1) enthalten; Poly(aminosäure)n, die zwei verschiedene Pentamerblöcke enthalten, wobei ein Block eine Val-Pro-Gly-Val-Gly-Sequenz (VPGVG, SEQ ID NO:) aufweist, ein zweiter Block eine Val-Pro-Gly-X-Gly-Sequenz (VPGXG, SEQ ID NO:3) aufweist, wobei X ein Aminosäurerest ausgewählt aus der Gruppe bestehend aus Leu, ILE, Met, Glu(COOCH₃), Glu(COOH), Cys, His, LysNH₃, Lys und Asp(COOH) ist; und Kombinationen davon.

6. Kaugummigrundlage gemäß Anspruch 1, wobei das wenigstens eine wärmeempfindliche Polymer Celluloseether oder Stärkeether ist.

7. Kaugummigrundlage gemäß Anspruch 6, wobei der Celluloseether Hydroxypropylcellulose ist und wobei der Stärkeether 3-[2-Butoxy(ethoxy)m]-2-hydroxypropylstärkeether (BEmS) ist, wobei m = 0, 1 oder 2.

8. Kaugummigrundlage gemäß Anspruch 1, wobei das wenigstens eine wärmeempfindliche Polymer Polyoxyethylen-Polyoxypropylen-Polyoxyethylen-Triblockcopolymer ist und wobei die Grundlage ferner von 1 Gew.-% bis 40 Gew.-% Ethylenoxid umfasst.

9. Kaugummigrundlage gemäß einem der vorstehenden Ansprüche, wobei das eine oder die mehreren wärmeempfindlichen Polymere in einer Menge von 1 Gew.-% bis 35 Gew.-% vorhanden sind.

10. Kaugummigrundlage gemäß einem der vorstehenden Ansprüche, wobei das eine oder die mehreren wärmeempfindlichen Polymere in einer Menge von 10 Gew.-% bis 25 Gew.-% vorhanden sind.

11. Kaugummigrundlage gemäß einem der Ansprüche 1-9, wobei das eine oder die mehreren wärmeempfindlichen Polymere in einer Menge von 1 Gew.-% bis 10 Gew.-% vorhanden sind.

12. Kaugummiformulierung, umfassend die Kaugummigrundlagen gemäß einem der vorstehenden Ansprüche.

## Revendications

1. Base de chewing-gum comprenant au moins un polymère thermosensible, dans laquelle le polymère thermosensible possède une LCST allant de 0°C à 40°C et est choisi dans le groupe constitué par le poly(N-isopropylacrylamide), le poly(N-isopropylacrylamide) réticulé, les copolymères blocs de polyoxypropylène-polyoxyéthylène, un copolymère tri-bloc de polyoxyéthylène-polyoxypropylène-polyoxyéthylène, les dérivés d'acrylamide N-substitués, les acides polyaminés, un éther de cellulose, un éther d'amidon, les copolymères blocs de poly(éther-ester), le chitosane/bêta-glycérophosphate, et des combinaisons de ceux-ci.

2. Base de chewing-gum selon la revendication 1, dans laquelle le polymère thermosensible possède une LCST allant de 20°C à 37°C.

3. Base de chewing-gum selon la revendication 1, dans laquelle le polymère thermosensible possède une LCST allant de 25°C à 35°C.

4. Base de chewing-gum selon la revendication 1, dans laquelle l'au moins un polymère thermosensible est un dérivé d'acrylamide N-substitué, où le dérivé d'acrylamide N-substitué est choisi dans le groupe constitué par le N-n-propylacrylamide, le N,N-diéthylacrylamide, le N-cyclopropyl-méthacrylamide, et des combinaisons de ceux-ci.

5. Base de chewing-gum selon la revendication 1, dans laquelle l'au moins un polymère thermosensible est un acide polyaminé, où l'acide polyaminé est choisi dans le groupe constitué par la méthacryloyl glycine méthylester, la méthacryloyl proline, la méthacryloyl phénylalanine méthylester, la méthacryloyl alanine méthylester, les polymères contenant une séquence Arg-Gly-Asp-Ser (RGDS, SEQ ID n° 1), les acides polyaminés contenant deux blocs de pentamères différents, où l'un des blocs possède une séquence Val-Pro-Gly-Val-Gly (VPGVG, SEQ ID n° 2), un deuxième bloc possède une séquence Val-Pro-Gly-X-Gly (VPGXG, SEQ ID n° 3), où X est un résidu d'acide aminé choisi dans le groupe constitué par Leu, Ile, Met, Glu (COOCH₃), Glu (COOH), Cys, His, LysNH₃, Lys et Asp(COOH), et des combinaisons de ceux-ci.

6. Base de chewing-gum selon la revendication 1, dans laquelle l'au moins un polymère thermosensible est un éther de cellulose ou un éther d'amidon.

7. Base de chewing-gum selon la revendication 6, dans laquelle l'éther de cellulose est l'hydroxypropylcellulose, et où l'éther d'amidon est l'éther de 3-[2-butoxy(éthoxy)m]-2-hydroxypropyl amidon (BEmS), où m = 0, 1 ou 2.

8. Base de chewing-gum selon la revendication 1, dans laquelle l'au moins un polymère thermosensible est un copolymère tri-bloc de polyoxyéthylène-polyoxypropylène-polyoxyéthylène, et où la base comprend en outre de 1% à 40% en poids d'oxyde d'éthylène.

9. Base de chewing-gum selon l'une quelconque des revendications précédentes, dans laquelle les un ou plusieurs polymères thermosensibles sont présents selon une quantité allant de 1% à 35% en poids.

10. Base de chewing-gum selon l'une quelconque des revendications précédentes, dans laquelle les un ou plusieurs polymères thermosensibles sont présents selon une quantité allant de 10% à 25% en poids.

11. Base de chewing-gum selon les revendications 1-9, dans laquelle les un ou plusieurs polymères thermosensibles sont présents selon une quantité allant de 1% à 10% en poids.

12. Formulation de chewing-gum, comprenant les bases de chewing-gum selon l'une quelconque des revendications précédentes.


### SEQUENCE LISTING

<110> WM. WRIGLEY JR. COMPANY
<120> GUM BASES AND CHEWING GUMS USING THERMOSENSITIVE POLYMERS
<130> 069269.0195
<150> 62/235,327
   <151> 2015-09-30
<160> 3
<170> PatentIn version 3.5
<210> 1
   <211> 4
   <212> PRT
   <213> Artificial Sequence
<220>
   <223> poly(amino acid) block
<400> 1
   Arg Gly Asp Ser
   1
<210> 2
   <211> 5
   <212> PRT
   <213> Artificial Sequence
<220>
   <223> poly(amino acid) block
<400> 2
   Val Pro Gly Val Gly
   1               5
<210> 3
   <211> 5
   <212> PRT
   <213> Artificial Sequence
<220>
   <223> poly(amino acid) block
<220>
   <221> misc_feature
   <222> (4)..(4)
   <223> X/Xaa can be one amino acid residue selected from the group consisting of Leu, ILE, Met, Val, Glu(COOCH3), Glu(COOH), Cys, His, LysNH3, Lys and Asp(COOH).
<400> 3
   Val Pro Gly Xaa Gly
   1               5